# EUROPEAN PATENT APPLICATION

(11) **EP 1 661 868 A1**
(43) Date of publication of application: **31.05.2006**
(21) Application number: 04027971.3
(22) Date of filing: 25.11.2004
(51) Int. Cl.: C04B 28/26, C04B 38/02

(54) **Light conglomerate with insulating and resistance characteristics, based on inert minerals and cold expanded in various ways, for the manufacture of components for the construction industry, and the associated manufacturing process**

(71) Applicant: R.D.B. S.p.A., 29100 Pontenure PC (IT)
(72) Inventor: Gazzola, Giuseppe, 29100 Piacenza (IT)
(74) Representative: La Ciura, Salvatore

(57) **Abstract**

This invention relates to a new light, insulating conglomerate suitable for the production of components for the construction industry such as panels, slabs and blocks, which are mainly made with inorganic materials and consequently are not only non-flammable but also have a low environmental impact.

A preferred composition of the conglomerate according to the invention comprises:
- aggregates 25% - 36% preferably 36%
- binders 20% - 33% preferably 20%
- oxides 2.5% - 3.0% preferably 2.5%
- silicate 21% - 23% preferably 22%
- admixtures 0.1% - 3.0% preferably 0.1 %
- expanding agent 1.0% - 2.0% preferably 2.0%
- water 14% - 17% preferably 17.4%
the percentages indicated being expressed in weight.

The invention relates to the relevant production method.

## Description

This invention relates to a new light, insulating conglomerate with excellent fire resistance characteristics which is suitable for the production of components for the construction industry such as panels, slabs and blocks of any shape or size, which are mainly made with inorganic materials and consequently are not only non-flammable but also have a low environmental impact.

The new material according to the invention is cold-expanded in moulds or steel forms and stabilised with hydraulic binders to obtain products which, in just a few minutes, reach a sufficient consistency to be removed from the mould so that hardening and curing can be completed.

For this purpose an expanding agent, typically hydrogen peroxide, is added to a mixture of aggregates, hydraulic binders, water and a viscosity-controlling agent like sodium silicate shortly before casting. This generates the development of oxygen, which in turn creates a myriad of bubbles in the mixture, the sizes of which depend on the type of mixture, the amount of expanding agent and the physical and mechanical characteristics of the manufacturing process.

The compound expands rapidly and solidifies in a few minutes, reaching a sufficient consistency for it to be removed from the mould so that curing can be completed.

The increasing attention paid to environmental protection has led experts in the construction industry to seek to develop products which are (i) ecological in terms of the origin of the materials, the choice being oriented in favour of natural products and excluding components of organic or synthetic origin, and (ii) light and insulating, so that heat loss is reduced.

This requirement has now become even more urgent due to recent energy consumption-limiting legislation and demand from users, who have realised the need to reduce atmospheric pollution in the home and the workplace.

There has been a considerable increase in the use of insulating materials in the construction industry in recent years. However, they are nearly always light insulating materials which contain, as raw materials or admixtures, binders, expanding agents, foaming agents, etc. of evident synthetic origin which are consequently pollutant, difficult to dispose of, and above all liable to release irritant or toxic exhalations, especially in the event of overheating (for example polyurethane, which is very widely used as a heat insulation material in the building industry, develops a toxic gas in case of fire).

Moreover, some of these components can release substances, even at ambient temperature, which are at best irritant, and which can create problems and disorders with time in closed premises such as homes and offices.

Those skilled in the art have experimented with various solutions to this problem, but without achieving a complete, satisfactory result to date.

The present applicant is the holder of Italian patent number 1,237,567 of 19/12/1989, which proposes the use of diatomaceous earths as aggregates in concrete mixes.

A material marketed under the brand name of Gasbeton® is also known; it is constituted by an expanded cellular concrete, cured in the autoclave, obtained from a mixture of silica sand, cement and lime by means of a manufacturing process that provides a natural, ecological product in terms of composition and manufacturing technology, with good heat insulating, soundproofing and fireproofing characteristics, easy handling and a good degree of lightness (approx. 500 kg/m³).

However, this material has a number of drawbacks.

The manufacturing process involves finely grinding the constituents which, with the addition of water, form a mixture that is cast in large steel forms.

Aluminium powder is then added, giving rise to chemical reactions as a result of which hydrogen is developed, giving the mass a cellular structure. The expansion stage lasts at least two hours to give the mass a consistency sufficient to allow subsequent cutting of the blocks, which are then cured in the autoclave for twelve hours under high temperature and pressure conditions.

As will be seen, this is a complex process, which requires a great deal of time before the product reaches a certain consistency and therefore requires a large number of large moulds, with the associated costs.

This material is therefore produced in large blocks which are cut to size, mainly in prismatic shapes.

The present invention, which falls into this sector, offers a new material for the production of components for the construction industry which presents the required characteristics of insulation and lightness, is made entirely with natural materials of inorganic origin, without the addition of synthetic components, and reaches a sufficient degree of hardness in a few seconds, so that it can be extracted from the mould almost immediately, thus greatly increasing the productivity of the equipment used.

In practice, with the process according to the invention, cold expansion of the mixture is performed in a time which ranges between a few seconds and 1-2 minutes, depending on the percentages of the reagents which are introduced into the mixture, allowing fast moulding of products of any shape, designed for a wide variety of uses.

Moreover, the process according to the invention is far more flexible than the processes currently known for the production of light insulating materials, which involve the use of certain raw materials only, excluding all those which do not meet specific process parameters, because the morphology of the product can vary as required, and it can easily be adapted to different raw materials, including the use of recycled aggregates originating from other processes, thus contributing to a further reduction in environmental impact.

As the products are formed by expansion and hardening of the mixture, which is cast in moulds while still in the fluid state, more complete, enhanced products can easily be obtained by causing layers of other materials, suitably positioned in the steel forms, to adhere to the same mortar.

Blocks and panels complete with surface finishings, such as differently coloured plasters, brick or ceramic cladding, can be produced.

By prior positioning of insulating pads in the moulds and in an intermediate position, pre-assembled blocks for multi-layer walls can be produced for applications requiring a high level of soundproofing.

This invention will now be described in detail, by way of example but not of limitation, by reference to the examples set out below.

### EXAMPLE 1- PRODUCT

Ideal, but not limiting formulations of the material according to the invention are reported below, the various percentages being expressed in weight.
- aggregates 25% - 36%
- binders 20% - 33%
- oxides 2.5% - 3.0%
- silicate 21% - 23%
- admixtures 0.1% - 3.0%
- expanding agent 1.0% - 2.0%.
- water 14% - 17%

The aggregates are of mineral origin and can include pumice, lapilli, tuff, calcium carbonate, sand, diatomite, aggregates recovered from industrial production, such as crushed brick or blast furnace slag, or expanded materials such as perlite or vermiculite.

The binders are the hydraulic cement type such as pozzolan cement, portland cement, lime and chalk.

The oxides are inorganic oxides which have the function of giving the mixture the required colour.

The silicate, with or without alkalis, in particular sodium silicate, acts as setting accelerator and viscosity-controlling agent.

The admixtures have the function of regulating the reaction to facilitate preparation of the mixture, and can have an acrylic or lignin sulphonate base.

The expanding agent is usually hydrogen peroxide, with suitable catalysts such as manganese dioxide.

Excellent results are obtained with the following formulation:
- aggregates 36%
- binders 20%
- oxides 2.5%
- silicate 22%
- admixtures 0.1%
- expanding agent 2.0%
- water 17.4%

### EXAMPLE 2 - METHOD

For the preparation of products made with the material according to the invention, the procedure is as follows.

The aggregates are ground more or less finely, depending on the lightness and strength to be given to the end product. If necessary, as in the case of diatomites or clays, aggregates which are not already calcined and insoluble in water could be pre-fired in a kiln, such as the rotary-drum type, at high temperature.

Crushed aggregates, binder (cement) and metal oxides are mixed in a mixer. The percentages in which these components are included in the mixture will be chosen on the basis of the performance required, especially the heat insulation, soundproofing and mechanical strength characteristics.

When these components have been evenly mixed a liquid phase is added, consisting of water with the addition of setting accelerators, viscosity-controlling agents and other admixtures.

In particular, in the present example these setting accelerators are constituted by sodium silicate.

The silicate has the function of setting accelerator and viscosity-controlling agent in relation to the binders introduced.

It is the presence of silicate which gives the mix an ideal viscosity, allowing a gradual, even expansion process, with cells distributed evenly throughout the material.

The addition of water and silicate to the mixture of aggregates and cement binders triggers the hydration reactions of the binders and setting phenomena, with an increase in viscosity.

The expanding agent, added during the last stage, is constituted by hydrogen peroxide at 35-60 volumes.

The mixture is poured, over a period of 1-2 minutes, into moulds coated with a non-stick layer to facilitate ejection of the products.

The mould lid will be perforated to allow air to escape after expansion of the material.

The shape of the moulds can be complex, including dovetails on all four edges to facilitate laying on site, lightening holes, and shaped surfaces with embossing for aesthetic purposes.

As the expansion and first hardening stage is rapid (10-20 minutes), the products can be extracted, leaving the steel forms free for other operations.

The products can be cured according to techniques known in the industry, for example at ambient temperature with natural humidity for approx. three weeks, or with artificial curing cycles which reduce the time to approx. 18-20 hours.

To reduce the time still further, autoclave treatment can be performed for a few hours at controlled temperature, humidity and pressure.

Numerous samples have been produced with the formulation reported above, and laboratory tests demonstrate that they possess the characteristics indicated below.

Volume mass: can vary from approx. 250-300 Kg/m³ to over 600 Kg/m³, depending on the formulation used and the expansion chosen.

Heat conductivity: amounts to 0.0795 W/(m.K) for a density of 300 Kg/m³, indicating excellent heat insulation characteristics.

Compression breaking load: tests performed on specimens with a density of 550 Kg/m³ show a strength of 5.5 N/mm².

Reaction to fire: test results demonstrate that the material is entirely non-flammable.

Fire resistance: the standardised test on 8 centimetre thick walls made from blocks of the material according to the invention, with plastered surfaces, gave an REI value = 180 mins.

Durability: in tests comprising cycles with variable percentages of humidity, immersion in water for several days, drying and checking of the characteristics, no deterioration of the material was observed.

Soundproofing power: a composite wall made from elements 8 cm thick forming a total of 22 cm has a soundproofing power of Rw=51 dB.

To sum up, the material according to the invention offers:
- an excellent heat insulation value, to the extent that it does not require the insertion of layers of insulating material in the walls to keep heat dispersion within the limits laid down by law;
- adequate mechanical strength;
- the possibility of making pre-finished surfaces, with short assembly times.

An expert in the field could devise various modifications and variations, all of which should be deemed to fall within the ambit of this invention.

## Claims

1. Conglomerate for the production of components for the construction industry, of the type constituted by a mixture of aggregates, hydraulic binders, a liquid phase and an expanding agent designed to develop a gas in said mixture, **characterised in that** said aggregates are inorganic mineral aggregates and that said liquid phase comprises at least a percentage of a viscosity-controlling and/or hardening agent.

2. Conglomerate for the production of components for the construction industry as claimed in claim 1, **characterised in that** said viscosity-controlling and/or hardening agent is a silicate.

3. Conglomerate for the production of components for the construction industry as claimed in claim 2, **characterised in that** said viscosity-controlling agent is a sodium silicate.

4. Conglomerate for the production of components for the construction industry as claimed in claim 3, **characterised in that** said silicate is included in the mixture in the quantity of between 21 % and 23%.

5. Conglomerate for the production of components for the construction industry as claimed in claim 4, **characterised in that** said expanding agent is hydrogen peroxide.

6. Conglomerate for the production of components for the construction industry as claimed in claim 5, **characterised in that** said hydrogen peroxide is included in the mixture in an amount between 1% and 2%.

7. Conglomerate for the production of components for the construction industry as claimed in any of the preceding claims, **characterised in that** it comprises:
• aggregates 25% - 36%
• binders 20% - 33%
• oxides 2.5% - 3.0%
• silicate 21% - 23%
• admixtures 0.1 % - 3.0%
• expanding agent 1.0% - 2.0%.
• water 14% - 17%
the percentages indicated being expressed in weight.

8. Conglomerate for the production of components for the construction industry as claimed in any of claims 1 to 6, **characterised in that** it comprises:
• aggregates 36%
• binders 20%
• oxides 2.5%
• silicate 22%
• admixtures 0.1 %
• expanding agent 2.0%
• water 17.4%
the percentages indicated being expressed in weight.

9. Products **characterised in that** they are made with a conglomerate as claimed in any of claims 1 to 8.

10. Method for the production of a conglomerate as claimed in any of claims 1 to 8, **characterised in that** it includes the following stages:
- mixing of aggregates and hydraulic binders;
- addition of a liquid phase comprising water and at least one viscosity-controlling and/or hardening element;
- addition of an expanding material;
- pouring of the mixture into a mould having the shape of the product to be made, including for composite applications;
- consolidation, followed by extraction and curing of the product.

11. Method for the production of a conglomerate as claimed in claim 10, **characterised in that** said viscosity-controlling material is sodium silicate.

12. Method for the production of a conglomerate as claimed in claim 11, **characterised in that** said expanding agent is hydrogen peroxide.

13. Method for the production of a conglomerate as claimed in claim 12, **characterised in that** the hydrogen peroxide is added when the mixture has reached the ideal viscosity, before it is poured into the moulds.

14. Method for the production of components for the construction industry, **characterised in that** it includes, during the stage of expansion in the moulds, a combination of material as claimed in claims 1 to 8 with layers of other materials, positioned on one or two faces, for finishing with plaster, brick or ceramic, which adhere perfectly to the products.

15. Method for the production of components for the construction industry as claimed in claim 14, **characterised in that** it includes, during the stage of expansion of the moulds, a combination of the material claimed in claims 1 to 8 with layers of other materials, positioned in an intermediate area, to obtain «sandwich» or multi-layer products with soundproofing characteristics.
